# EUROPÄISCHE PATENTSCHRIFT

(11) **EP 0 977 641 B1**
(45) Veröffentlichungstag und Bekanntmachung des Hinweises auf die Patenterteilung: **23.06.2004**
(21) Anmeldenummer: 98913503.3
(22) Anmeldetag: 23.04.1998
(51) Int. Cl.: B21D 55/00, B21D 5/02, F16P 3/14

(54) **Maschine mit einem opto-elektrischen Schutzsystem und Verfahren zum Betreiben derselben**
Machine with an optical-electrical protective system and method for operating such a machine
Machine avec un système de protection opto-électrique et procédé d'utilisation d'une telle machine

(30) Priorität: 23.04.1997 CH 94397
(43) Veröffentlichungstag der Anmeldung: 09.02.2000
(73) Patentinhaber: SICK AG, 79183 Waldkirch (DE)
(72) Erfinder: ROSTRÖM, Göran, CH-8200 Schaffhausen (CH)
(74) Vertreter: Patentanwälte Breiter + Wiedmer AG
(86) Internationale Anmeldenummer: PCT/CH1998/000159
(87) Internationale Veröffentlichungsnummer: WO 1998/047645

(56) Entgegenhaltungen:
- EP-A- 0 562 726
- WO-A-81/00750
- FR-A- 2 512 920
- GB-A- 1 307 078
- US-A- 4 166 369
- US-A- 4 249 074
- US-A- 5 579 884

## Beschreibung

Die Erfindung bezieht sich auf ein opto-elektrisches Schutzsystem einer mit wenigstes teilweise mechanisch gefährlichen Arbeitsgängen betriebene Maschine nach dem Oberbegriff von Patentansprunch 1. Weiter betrifft die Erfindung ein Verfahren zum Betrieb der Vorrichtung.

Opto-elektrische Schutzsysteme, insbesondere Sicherheits-Lichtvorhänge, werden in der industriellen Praxis auf breiter Basis verwendet, um das Eindringen von Menschen, menschlichen Gliedern, Tieren oder Gegenständen in einen geschützten oder gefährlichen Bereich anzuzeigen. Typische Anwendungen für Sicherheits-Lichtvorhänge dienen beispielsweise dem Schutz einer Person vor Verletzungen im Gefahrenbereich von Maschinen, beispielsweise von Stanzpressen, Abkantpressen, Hebelgestängen, Giessmaschinen, Spulenwickelmaschinen, Roboteranlagen usw. Hier und im nachfolgenden werden einfachheitshalber die im wesentlichen funktionsäquivalenten Ultraschall-, Kamerabild-, Wärmebild- und ähnliche Schutzsysteme vom Begriff "opto-elektrisches Schutzsystem" mitumfasst.

In der EP, A1 0264349 wird ein Sicherheitssystem für eine Abkantpresse oder eine ähnlich wirkende Maschine beschrieben. Dabei wird ein Bündel von Laserstrahlen von einem Sender auf der einen Seite der Presse zum Empfänger auf der ändern Seite der Presse ausgestrahlt. Das Bündel wird parallel zur Stempelkante und in Abstand d von der Blechoberfläche des Werkstücks geführt. Beim Abkantvorgang wird die Stempelkante in einer vertikalen Ebene abgesenkt, in welcher auch das Laserbündel liegt. In diesem Laserbündel wird die Geschwindigkeit des Stempels gemessen und beim Ueberschreiten einer vorgegebenen Geschwindigkeit abgebremst. Da der Abstand d des Laserbündels vom Blech etwa der Dicke eines menschlichen Fingers entspricht, soll diese Sicherheitsmassnahme einen rechtzeitigen Rückzug des Fingers erlauben.

In der EP, A1 0562726, die eine Maschine nach dem Oberbegriff des Anspruchs 1 betrifft, wird ein aus wenigstens zwei Segmenten bestehender Sicherheits-Lichtvorhang gezeigt, welcher das Eindringen von Gegenständen in eine geschützte Zone besser detektieren soll. Der Lichtvorhang kann beispielsweise abgewinkelt ausgebildet sein, wobei jedes Segment separate Sender und Empfänger für ein Flächenschutzsystem aus einem Mehrstrahl-Lichtvorhang besteht. Alle Sender und Empfänger der Segmente sind in Serieschaltung miteinander verbunden, was an jeden Einzelfall angepasste abgewinkelte Anordnungen erlauben soll.

Diese und ähnliche bekannte Systeme beinhalten gemäss der EP, A1 0264349 ein verhältnismässig grosses Restrisiko oder bedingen bei der EP, A1 0562726 komplizierte Anordnungen von Sicherheits-Lichtvorhängen, welche ein freies Manipulieren an Maschinen behindern.

Der Erfinder hat sich die Aufgabe gestellt, ein insbesondere opto-elektrisches Schutzsystem der eingangs genannten Art zu schaffen, welches höchste Sicherheit bietet, flexibel anwendbar ist, einen geringen Aufwand erfordert und an verschiedenste Gesetzesnormen anpassbar ist.

Ausgehend von der bekannten Vorrichtung wird die Aufgabe erfindungsgemäss nach dem kennzeichen von Patentanspruch 1 gelöst. Anspruch 11 betrifft ein Verfahren zum Betrieb der Maschine nach der Erfindung.

Spezielle und weiterbildende Ausführungformen des Schutzsystems sind Gegenstand von abhängigen Patentansprüchen.

Die Kombination eines etwa vertikalen Sicherheits-Lichtvorhangs als erstem Schutzfeld und wenigstens einer von einem Reflexions-Lichttaster erzeugten, vorzugsweise halbkreisförmigen Fläche als zweitem Schutzfeld mit innerem permanentem und äusserem dynamischem Bereich bieten bezüglich der Sicherheit und der optimalen Betriebsabläufe bisher nie erreichte ideale Voraussetzungen, welche durch bevorzugte Massnahmen weiter verbessert werden können.

Ein opto-elektrisches, aber auch ein vorhergehend erwähntes, funktionsäquivalentes Schutzsystem kann bei einer grossen Zahl von in industriellem Rahmen eingesetzten Maschinen mit wenigstens einem teilweise gefährlichen Arbeitsgang eingesetzt werden, Beispiele sind vorstehend aufgezählt. Besonders hervorzuheben sind Abkantpressen, beispielsweise programmgesteuerte Gesenkbiegepressen, und ähnlich arbeitende Maschinen.

Sicherheits-Lichtvorhänge sind an sich bekannt, beispielsweise aus der EP,A2 0281747. Ein Sicherheits-Lichtvorhang ist in Form eines flächendeckenden Mehrstrahlen-Schutzfeldes ausgebildet, wobei die einzelnen Strahlen in durch die Anforderungen gegebenen Abständen angeordnet sind. Beim Unterbruch eines oder mehrerer Lichtstrahlen wird ein elektrisches Signal erzeugt, welches über einen Aktuator beispielsweise einen Maschinenstop, eine Aenderung der Arbeitsgeschwindigkeit, z.B. den Kriechgang, ein optisches und/oder akkustisches Signal auslöst.

Mit Lichtzeitmessung arbeitende Reflexions-Lichttaster sind ebenfalls an sich bekannt, beispielsweise aus der EP, A2 0281748. Mit einem Radius von etwa 15 m kann eine Halbkreisfläche von insgesamt 350 m² überstrichen werden. Innerhalb dieser Fläche lassen sich unter dem Einsatz eines PC zwei Schutzfelder frei einstellbar definieren:
- In einem sicheren Schutzfeld, dem Gefahrenbereich, kann eine Person wahrgenommen und eine gefährliche Maschinenbewegung sofort gestoppt werden.
- In einem anschliessenden Warnschutzfeld kann bei der Wahrnehmung einer Person ausserhalb des eigentlichen Gefahrenbereichs ein Warnsignal ausgelöst werden.

Ein Reflexions-Lichttaster arbeitet im Gegensatz zu einem Sicherheits-Lichtvorhang nicht mit Sendern/Empfängern, er braucht auch keinen Reflektor. Ein äusserst kurzer Lichtimpuls wird ausgestrahlt und über einen rotierenden Spiegel abgelenkt, wodurch wie erwähnt eine halbkreisförmige Fläche überstrichen wird. Gleichzeitig wird eine elektronische Zeitmessung gestartet. Trifft der Taststrahl auf ein Hindernis, wird das diffus reflektierte Licht von einem Sensor empfangen und gleichzeitig die Zeit- oder Distanzmessung angehalten. Aus der Zeitdifferenz zwischen Sende- und Empfangsimpuls wird die Distanz zum diffus reflektierenden Objekt berechnet und einer definierten Zone zugeordnet (sicheres Schutzfeld, Warnschutzfeld, ausserhalb Ueberwachungszone). Dadurch lässt sich das Schutzfeld genau dem Gefahrenbereich anpassen, der Montageaufwand wird geringer und den Arbeitsablauf behindernde mechanische Einrichtungen entfallen.

Der Sicherheits-Lichtvorhang und der Reflexions-Lichttaster haben im Gefahrenbereich eine so gute Auflösung, dass ein eindringendes Objekt von Fingergrösse ein Signal auslöst, die Auflösung liegt deshalb vorzugsweise bei wenigstens etwa 15 mm, insbesondere wenigstens etwa 10 mm. Damit ist grösstmögliche Sicherheit gegeben, die Gefahrenzone endet in der Regel 30 - 40 cm vom Maschinenteil mit einer gefährlichen Bewegung entfernt, weshalb für eine Gefährdung die ganze Hand, nicht nur ein Finger, in den Gefahrenbereich geführt werden müsste, bevor eine Verletzungsgefahr entsteht. Das minimale Auflösungsvermögen wird durch eine Hand, auch durch ein Knie oder einen Fuss, um ein Mehrfaches überschritten.

Abkantpressen und ähnlich wirkende Bearbeitungsmaschinen für Bleche haben zur Auflage eines Werkstücks höhen- und seitenverstellbare Konsolen, welche in die zu schützende Gefahrenzone hineinreichen. Einzelne Lichtstrahlen des Sicherheits-Lichtvorhangs müssen deshalb ausgeblendet werden, damit die Abkantpresse bei eingelegtem Werkstück betätigt werden kann. In den Konsolen sind deshalb bevorzugt aufeinander abgestimmte Durchtrittsöffnungen für wenigstens einen Teil der Strahlen des Sicherheits-Lichtvorhangs ausgespart, welche einen ungehinderten Durchtritt gewährleisten. Wahlweise können die Konsolen wenigstens im Bereich des Lichtdurchtritts aus einem transparenten Material bestehen. Diesbezüglich geeignete Konsolen bestehen beispielsweise aus Plexiglas oder einem anderen transparenten, mechanisch festen Kunststoff.

Die beiden Standsäulen zur Erzeugung eines Sicherheits-Lichtvorhangs werden auf einer Basisplatte oder zweckmässig direkt auf dem Fussboden montiert, beispielsweise durch Verschrauben. Dadurch wird einerseits der Abstand von der Maschine und andererseit deren seitliche Ausdehnung des Lichtvorhangs bestimmt. Diese Standsäulen behindern die Funktion des durch den Reflexions-Lichttaster erzeugten Schutzfeldes, je nach Säulenquerschnitt entsteht ein sich kreissektorförmig ausdehnender, inaktiver "Schatten". Offensichtlich ist dieser umso grösser, je näher eine Standsäule beim Reflexions-Lichttaster, also bei der Maschine plaziert ist. Andere Faktoren sprechen jedoch dafür, die Standsäulen möglichst nahe bei der Maschine zu plazieren.

Nach einer besonders vorteilhaften Ausführungsform der Erfindung haben deshalb die Standsäulen im Bereich des Schutzfeldes des Reflexions-Lichttasters bezüglich der Richtung des abtastenden Lichtstrahls einen stark verminderten Querschnitt. Dies erfolgt in der Praxis nach einer ersten Variante durch die Ausbildung von Perforationen in Richtung des Lichtstrahls, insbesondere von in Längsrichtung der Standsäule verlaufenden Schlitzen. Nach einer weiteren Variante kann die Standsäule im entsprechenden Bereich querschnittlich vollständig unterteilt und die beiden Teilstücke mit wenigstens drei oder vier Stäben in Abstand miteinander verbunden werden. Aus Stabilitätsgründen sind ein oder zwei Verbindungsstäbe weniger günstig, ihr abdeckender Wirkungsquerschnitt wäre grösser als bei drei oder vier statisch gut über den Querschnitt verteilten, dünneren Stäben. Es ist auch zu beachten, dass möglichst viele Stäbe bezüglich des Lichtstrahls hintereinander angeordnet sind. Bei drei Stäben werden nur zwei vom Lichtstrahl beaufschlagt, der dritte liegt im "Schatten" eines ändern.

Die Länge der Perforationen oder der Stäbe wird bezüglich der Stabilität der Standsäulen und der Verstellbarkeit des Schutzfeldes des Reflexions-Lichttasters optimalisiert, wobei auch die Ausdehnung des Sicherheits-Lichtvorhangs zu beachten ist.

Zweckmässig sind die Standsäulen über eine arretierbare sphärische Verstellung mit ihrer Fussplatte verbunden. Dadurch ergeben sich in einem zweckmässig beschränkten Winkelbereich optimale Einstellmöglichkeiten. Derartige sphärische Verstellmechanismen sind an sich bekannt. Vorzugsweise beträgt der allseitige Verstellwinkel β gegenüber der Vertikalen höchstens etwa 10°.

Nach einer weiteren speziellen Ausführungsform der Erfindung verläuft das Schutzfeld des Reflexions-Lichttasters nicht horizontal, sondern ist als schräge Ebene mit einem Winkel a von zweckmässig 10 - 45° , insbesondere 10 - 30° , gegenüber der Horizontalen festgelegt. Der Reflexions-Lichttaster wird entsprechend schräg am Maschinengehäuse oder Maschinenrahmen befestigt. Die Montage erfolgt in der Regel unmittelbar oberhalb des Fussbodens an der Vorderkante der Maschine. Der schräg ansteigende Verlauf des Schutzfeldes zum Abtasten erweitert die Anbaumöglichkeiten weiterer Peripheriegeräte und gewährleistet eine grössere Arbeitsfreiheit der Bedienungsperson. Diese das Schutzfeld bildende Fläche kann bezüglich der Schräge auch mit an sich bekannten mechanischen Mitteln manuell oder über programmgesteuerte Aktuatoren einstellbar sein. Obwohl das Schutzfeld in der Regel halbkreisförmig ausgebildet ist, kann es eine beliebige geometrische Form haben.

Der Reflexions-Lichttaster definiert, wie vorstehend erwähnt, ein sicheres Schutzfeld im Gefahrenbereich, welches hier als inneres permanentes Schutzfeld bezeichnet wird. Dieses kann in einem Halbkreis mit einem Durchmesser von beispielsweise 8 m beliebig definiert werden. Ein in diesem Bereich eingedrungenes Objekt löst immer einen sofortigen Stop des gefährlichen Arbeitsganges an der Maschine oder zumindest dessen drastische Verlangsamung auf einen Kriechgang von etwa 10 mm/sec aus. An das innere permanente Schutzfeld schliesst wenigstens ein äusseres dynamisches Schutzfeld des Reflexions-Lichttasters an. Dieses ist, innerhalb eines Halbkreises mit einem Durchmesser von z.B. 30 m, mit Hilfe der Lichtzeitmessung ebenfalls frei definierbar. Beim Eindringen eines Objektes in ein äusseres dynamisches Schutzfeld wird z.B. ein Alarm ausgelöst und/oder die Arbeitsgeschwindigkeit der Maschine stark herabgesetzt, bei einer Abkantpresse beispielsweise wird der Stempel nur noch mit der bereits erwähnten Geschwindigkeit von nur noch 10 mm/sec abgesenkt.

Die Sicherheitsmassnahmen können noch erweitert werden, indem der Bereich des inneren permanenten Schutzfeldes des Reflexions-Lichttasters durch einen integrierten mechanischen Hintertret- und/oder Untergreifschutz an sich bekannter Bauart ergänzt ist. In besonderen Fällen kann das innere permanente Schutzfeld des Reflexions-Lichttasters auch durch dieses mechanische System ersetzt werden.

Grundsätzlich ist das opto-elektrische Schutzsystem vom Maschinentyp unabhängig. Es kann ohne weiteres ausgewechselt oder nachgerüstet werden. Besonders vorteilhaft sind maschinenunabhängige Standardbauelemente, welche sogar als Anbaumodul ausgebildet sein können.

In bezug auf das Verfahren wird die Aufgabe erfindungsgemäss dadurch gelöst, dass bei eingeschaltetem Schutzsystem der Unterbruch wenigstens eines nicht ausgeblendeten Lichtstrahls des Sicherheits-Lichtvorhangs und/oder Streulicht in einer nicht ausgeblendeten Reflexionsposition des Taststrahls des Reflexions-Lichttasters ein elektrisches Signal erzeugt wird, welches seinerseits einen Aktuator eines Maschinenbetätigungsorgans und/oder einer Alarmeinrichtung auslöst. Spezielle und weiterbildende Ausführungsformen des Verfahrens sind Gegenstand von abhängigen Patentansprüchen.

Mit einem üblichen opto-elektrischen Schutzsystem ausgerüstete Maschinen, insbesondere Abkantpressen, haben manuell betätigbare Betriebsartenwahlschalter, welche den Maschinengang beim Einrichten, der Produktion usw. festlegen. Nach einer vorteilhaften Weiterausbildung der Erfindung kann die Betriebsart bei einem bestimmten Uebergang von einem Schutzfeld zum ändern automatisch festgelegt werden. Eine geeignete Schutzfeldauswahl kann bei entsprechender Ausstattung ebenfalls automatisch detektiert werden.

Weiter kann zur Werkstückerkennung eine CNC-Steuerung mit einem Soll-Ist-Vergleich eingesetzt werden.

Die im opto-elektrischen Schutzsystem eingesetzten Lichtstrahlen sind vorzugsweise Laserstrahlen, insbesondere im sichtbaren und IR-Bereich.

Die wesentlichen erfindungsgemässen Vorteile können wie folgt zusammmengefasst werden:
- Ein Schutzfeld ab unmittelbarer Höhe des Fussbodens und der Vorderkante der Maschine bietet in Kombination mit einem Sicherheits-Lichtvorhang bei grösstmöglicher Sicherheit wesentlich mehr freien Bewegungsraum.
- Die Anbaumöglichkeiten für weitere Peripheriegeräte sind bedeutend grösser.
- Querschnittlich verminderte oder unterbrochene Standsäulen erlauben eine Schutzfelderweiterung des Reflexions-Lichttasters. Das Schutzsystem kann als Anbaueinheit für verschiedene Maschinentypen ausgestaltet werden.
- Das Schutzsystem ist an alle nationalen gesetzlichen Vorschriften anpassbar.

Die Erfindung wird anhand von in der Zeichnung dargestellten Ausführungsbeispielen, welche auch Gegenstand von abhängigen Patentansprüchen sind, näher erläutert. Es zeigen schematisch:
- Fig. 1 eine Seitenansicht einer als Gesenkbiegepresse ausgebildeten Abkantpresse mit zwei Lichtvorhängen (Stand der Technik),
- Fig. 2 eine erfindungsgemässe Weiterentwicklung von Fig. 1 mit einem Sicherheits-Lichtvorhang und einem Reflexions-Lichttaster,
- Fig. 3 eine Ansicht einer Abkantpresse mit opto-elektrischem Schutzsystem,
- Fig. 4 eine Draufsicht gemäss Fig. 3,
- Fig. 5 eine Seitenansicht gemäss Fig. 3 und 4,
- Fig. 6 eine leicht abgewinkelte Standsäule, und
- Fig. 7 die Auswirkungen von unterteilten Standsäulen eines Schutzsystems.

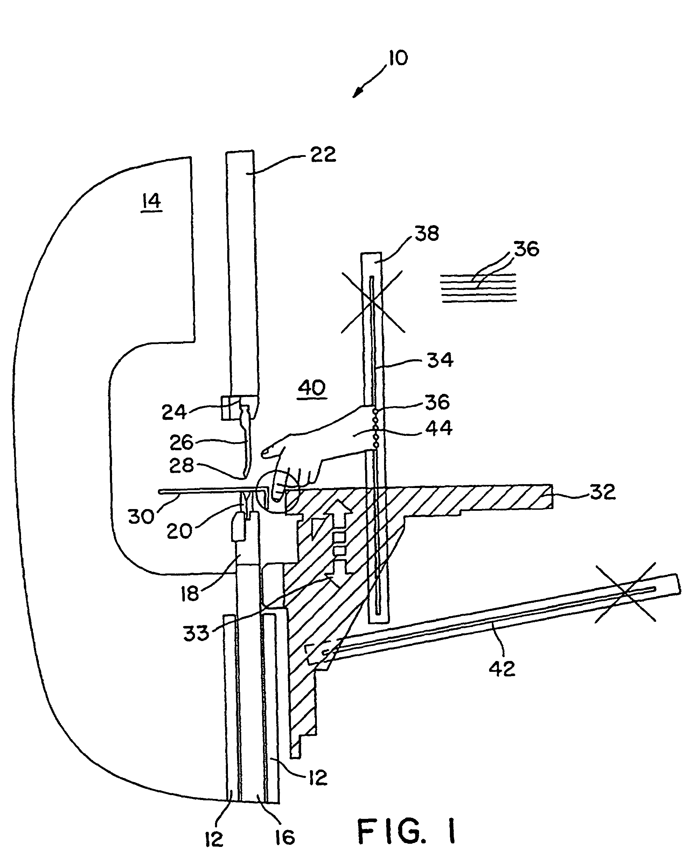

In Fig. 1 ist eine gemäss dem Stand der Technik ausgebildete Abkantpresse 10 mit einem angedeuteten Maschinenrahmen 12 und einem ebenfalls nur angedeuteten Schutzgehäuse oder Schutzkäfig 14 dargestellt.

An einem unteren Joch 16 ist ein Werkzeughalter 18 befestigt, in welchem die Matrizen 20, welche z.B. eine V-förmige Längsnut haben, festgeklemmt sind. An einem oberen Joch 22 ist ein Werkzeughalter 24 für einen mit grosser Presskraft und präziser Wegvorgabe absenkbaren Stempel 26 befestigt, welcher im Arbeitsbereich abgewinkelt ist und keilförmig in eine Stempelkante 28 ausläuft.

Auf der Matrize 20 liegt ein Werkstück 30, ein bereits einmal abgewinkeltes Metallblech.

Am Maschinenrahmen 12 sind wenigstens zwei Konsolen 32 zur Auflage der Werkstücke 30 längsverschiebbar angelenkt, welche Konsolen ebenfalls heb- und senkbar sind, was mit Pfeilen 33 angedeutet ist.

Ein opto-elektrisches Schutzsystem für die Abkantpresse 10 umfasst einen vertikal angeordneten Lichtvorhang 34 mit in einem Abstand von etwa 15 mm verlaufenden parallelen Strahlen 36, welche senkrecht zum Zeichnungsblatt verlaufend und umgeklappt angedeutet sind. Diese Strahlen 36 werden von einer ersten Standsäule 38 auf der einen Maschinenseite gesendet, von einer zweiten Standsäule 38 auf der andern Maschinenseite empfangen. Der Sicherheits-Lichtvorhang 34 überdeckt die Zugriffsöffnung 40 im Schutzgehäuse 14 der Maschine in Abstand vollständig.

Ein zweiter, gegenüber der Horizontalen leicht geneigter Lichtvorhang 42 des Schutzsystems ist analog zum vertikalen Lichtvorhang 34 ausgebildet, er verläuft abgewinkelt zu diesein. Es ist offensichtlich, dass dadurch die Bewegungsfreiheit der Bedienungsperson stark eingeschränkt wird.

Gemäss der Momentanaufnahme nach Fig. 1 sind beide Lichtvorhänge 24, 42 inaktiv. Ein Unterarm 44 der Bedienungsperson durchgreift den vertikalen Lichtvorhang 34 und unterbricht die auftreffenden Strahlen 36, welche in diesem Bereich punktförmig dargestellt sind. Die Abkantpresse 10 ist bereits abgestellt oder auf Kriechgang umgestellt.

Im Bereich der Konsole 32 sind die Strahlen 36 ausgeblendet, damit diese die Maschine nicht abstellen bzw. gar nicht anlaufen lassen.

Der untere Lichtvorhang 42 ist ebenfalls inaktiv, weil die Strahlen im Bereich der Konsole 32 nicht ausgeblendet sind, und/oder die Bedienungsperson mit den Beinen in dieses Schutzfeld geraten ist.

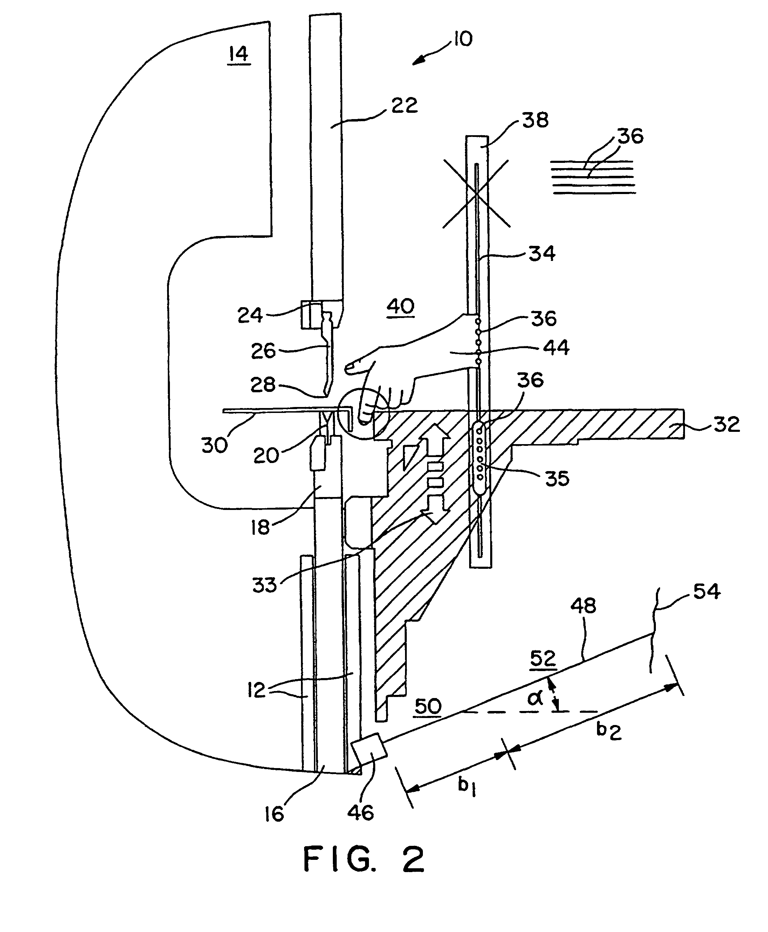

In der erfindungsgemässen Ausführungsform gemäss Fig. 2 fehlt im Vergleich zu Fig. 1 der untere, abgeschrägt angeordnete Lichtvorhang 42. Im Maschinenrahmen 12 ist benachbart dem Boden ein Reflexions-Lichttaster 46 derart angeordnet, dass er eine schräg nach oben gerichtete, vorzugsweise halbkreisförmig ausgebildete Fläche überstreicht. Das dadurch gebildete Schutzfeld 48 bildet zur Horizontalen einen Winkel α von etwa 20°. Ueber die Breite b₁ wird ein inneres permanentes Schutzfeld 50, anschliessend über die Breite b₂ ein äusseres dynamisches Schutzfeld 52 gebildet.

Beim Auftreffen eines Taststrahls des Schutzfeldes 48 auf der Beinkleidung 54 der Bedienungsperson entsteht eine diffuse Reflexion, ein sehr kleiner Teil der vom Reflexions-Lichttaster 46 emittierten Strahlung gelangt in einen Empfänger zurück, wo sie detektiert und ausgewertet wird.

Die Konsolen 32 weisen einen Längsschlitz als Durchtritts-Öffnung 35 für die Strahlen 36 des Sicherheits-Lichtvorhangs 34 in diesem Bereich auf.

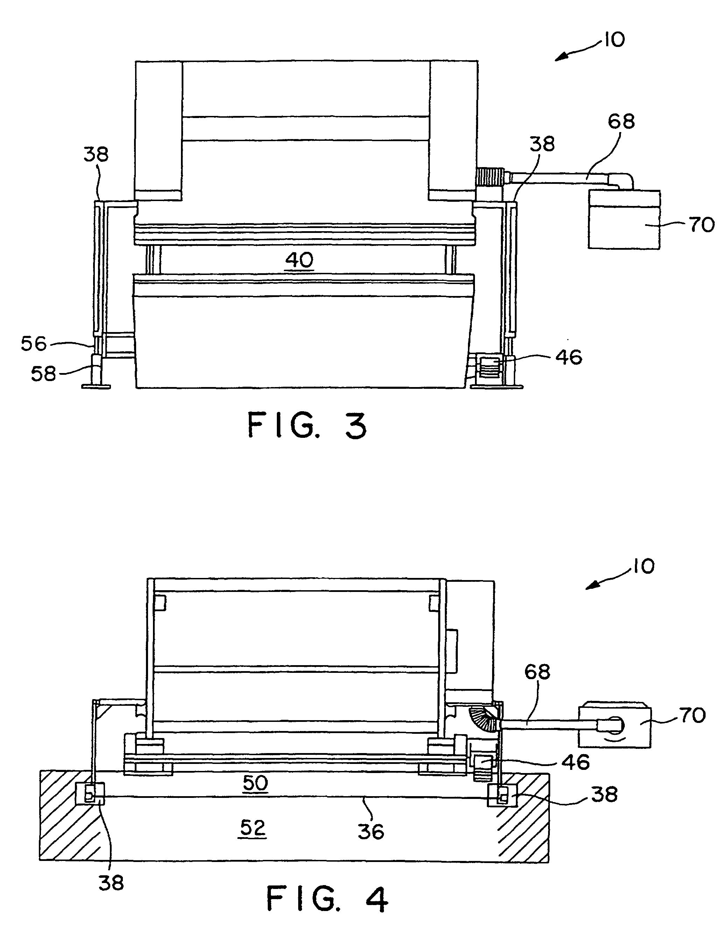

Aus den Fig. 3 und 4 ist die Anordnung der den Sicherheits-Lichtvorhang 34 erzeugenden Standsäulen 38 und des Reflexions-Lichttasters 46 erkennbar. Die Standsäulen 38 umfassen eine durch je drei Stäbe 56 geringen Querschnitts abgetrennte Fussplatte 58. Dank der unterteilten Standsäulen 38 entsteht eine in Fig. 4 schraffiert eingezeichnete Schutzfelderweiterung.

Ein über einen Schwenkarm 68 am Maschinenrahmen 12 angelenkter Monitor 70 mit Bildschirm und Bedienungsorganen beinhaltet die Elektronik.

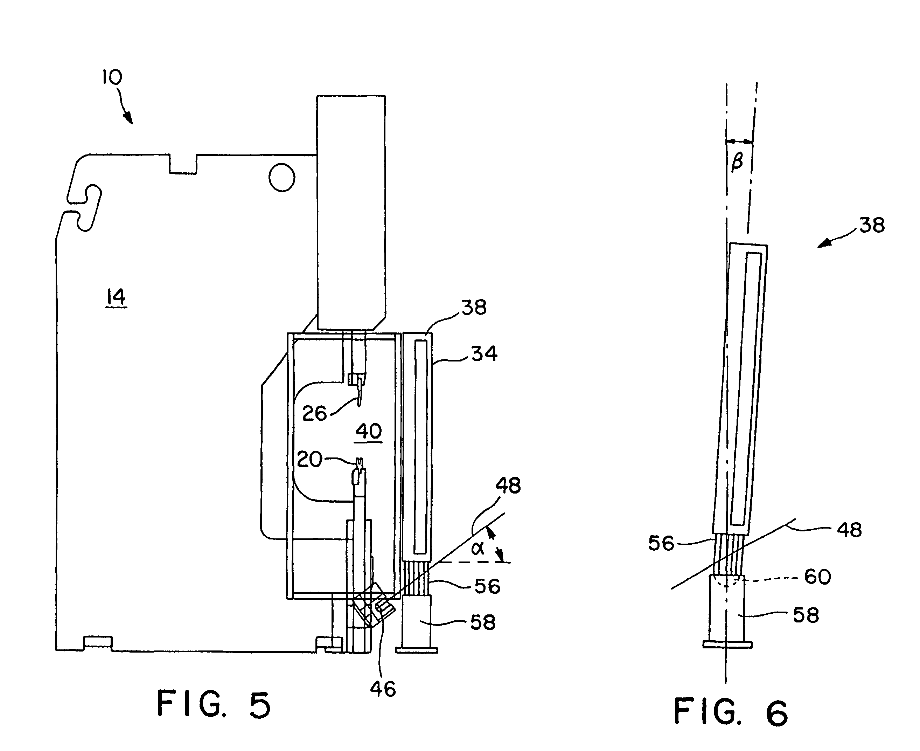

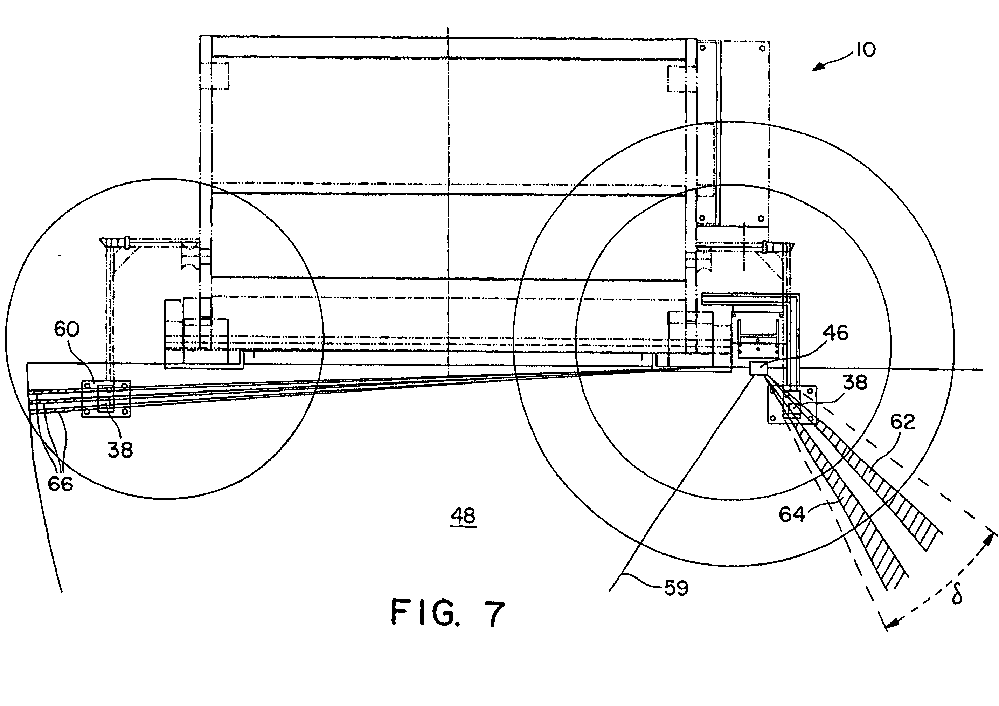

Die Unterteilung der Standsäule 38 ist in Fig. 5 besser erkennbar. Die drei Stäbe 56 bilden trotz des geringen Querschnitts eine stabile Verbindung zur Fussplatte 58. Die Stäbe 56 sind so ausgerichtet, dass der Taststrahl 59 (Fig. 7) des Schutzfeldes 48 auch eine benachbart angeordnete Standsäule 38 mit geringem Verlust durchgreifen kann. Die von den Stäben 56 gebildete Streustrahlung wird ausgeblendet.

Eine in Fig. 6 dargestellte Standsäule ist flexibler anwendbar, weil sie über eine arretierbare sphärische Verstellung 60 mit ihrer Fussplatte 58 verbunden ist. Der Verstellwinkel **β** gegenüber der Vertikalen liegt bei knapp 5°.

In Fig. 7 ist das schräg vom einem Reflexions-Lichttaster 46 nach oben verlaufende Schutzfeld 48 mit einem durchlaufenden Taststrahl 59 im Bereich hinter den Standsäulen 38 dargestellt. Beide Standsäulen 38 sind gemäss Fig. 6 ausgebildet. Eine dem Reflexions-Lichttaster 46 benachbarte Standsäule 38 ohne Unterteilung oder Einengung im Bereich des Schutzfeldes 48 würde einen breiten, gestrichelt angedeuteten Schatten werfen, eine inaktive Zone von kreissektorförmiger Gestalt mit einem Winkel δ. Die Stäbe 56 (Fig. 6) werfen zwei wesentlich kleinere, schraffierte Schattenfelder 62, 64, wobei der dritte Stab im Schattenfeld 62 liegt und keinen eigenen Schatten erzeugt.

In der entfernt vom Reflexions-Lichttaster 46 liegenden Standsäule 38 sind die Stäbe 56 nicht gerichtet, es werden deshalb drei allerdings sehr schmale Schattenfelder 66 erzeugt. Der Winkel δ einer standsäule 38 ohne Querschnittsverminderung im Bereich des Schutzfeldes 48 wäre hier wesentlich kleiner, etwa vergleichbar mit den Schattenfeldern 62, 64.

## Patentansprüche

1. Maschine, die mit wenigstens teilweise mechanisch gefährlichen Arbeitsgängen betrieben wird, insbesondere Abkantpresse (10) mit einem opto-elektrischen Schutzsystem welches System eine freie Zutritts- und/oder Zugriffsöffnung (40) in einem Schutzgehäuse oder Schutzkäfig (14) der Maschine während dem Betrieb jederzeit schützt, wobei beidseits der Zutritts- und/oder Zugriffsöffnung (40) eine etwa vertikale Standsäule (38) mit je einer Sender- oder Empfängereinrichtung für einen Sicherheits-Lichtvorhang (34) in Form eines flächendeckenden Mehrstrahlen-Schutzfeldes angeordnet ist,
**dadurch gekennzeichnet, dass**
über dem Fussboden, an der Vorderkante der Machine im Bereich der Zutritts- und/oder Zugriffsöffnung (40), ein Reflexions-Lichttaster (46), welcher eine horizontale oder schräge, bezüglich Neigung (α) und/oder Geometrie festlegbare Fläche überstreicht und ein inneres permanentes und/oder wenigstens ein äusseres dynamisches Schutzfeld (50,52) erzeugt, angeordnet ist.

2. Maschine nach Anspruch 1, **dadurch gekennzeichnet, dass** der Sicherheits-Lichtvorhang (42) und der vorzugsweise mit Lichtzeit- oder Distanzmessung arbeitende Reflexions-Lichttaster (46) im Gefahrenbereich eine Auflösung von wenigstens etwa 15 mm, insbesondere wenigstens etwa 10 mm, haben, wobei einzelne oder mehrere Strahlen (36) des Sicherheits-Lichtvorhangs (42) oder Reflexionspositionen des Schutzfeldes (48) des Reflexions-Lichttasters (46) ausblendbar sind.

3. Maschine nach Anspruch 1 oder 2, **dadurch gekennzeichnet, dass** Konsolen (32) zur Auflage von Werkstücken (30), insbesondere von Blechen bei Abkantpressen (10), aufeinander abgestimmte Durchtrittsöffnungen (35) für die Strahlen (36) des Sicherheits-Lichtvorhangs (34) haben, oder die Konsolen (32) wenigstens teilweise aus einem lichtdurchlässigen Material ausgebildet sind.

4. Maschine nach einem der Ansprüche 1 bis 3, **dadurch gekennzeichnet, dass** die Standsäulen (38) im Bereich des Schutzfeldes (48) des Reflexions-Lichttasters (46) bezüglich der radialen Richtung des Taststrahls (59) einen stark verminderten Querschnitt haben.

5. Maschine nach Anspruch 4, **dadurch gekennzeichnet, dass** die Querschnittsverminderung der Standsäule (38) in Form von Perforationen in Richtung des Taststrahls (59) erfolgt, oder die Standsäule (38) querschnittlich vollständig unterteilt ist und die Teilstücke mit drei oder vier Stäben (56) in Abstand miteinander verbunden sind, wobei die Stäbe (56) vorzugsweise in Richtung des Taststrahls (59) hintereinander angeordnet sind.

6. Maschine nach einem der Ansprüche 1 bis 5, **dadurch gekennzeichnet, dass** die Standsäule (38) über eine arretierbare sphärische Verstellung (60) mit ihrer Fussplatte (58) verbunden ist, wobei der Verstellwinkel (β) gegenüber der Vertikalen allseitig vorzugsweise höchstens etwa 10° beträgt.

7. Maschine nach einem der Ansprüche 1 bis 6, **dadurch gekennzeichnet, dass** das vorzugsweise halbkreisförmig ausgebildete Schutzfeld (48) des Reflexions-Lichttasters (46) als schräge Ebene mit einem Winkel (α) gegenüber der Horizontalen von 10 - 45°, insbesondere 10 - 30°, ausgebildet ist.

8. Maschine nach einem der Ansprüche 1 bis 7, **dadurch gekennzeichnet, dass** die linearen Dimensionen des inneren permanenten (50) und des äusseren dynamischen (52) Schutzfeldes (48) des Reflexions-Lichttasters (46) einstellbar sind, vorzugsweise programmgesteuert.

9. Maschine nach einem der Ansprüche 1 bis 8, **dadurch gekennzeichnet, dass** das innere permanente Schutzfeld (50) des Reflexions-Lichttasters (46) durch einen integrierten mechanischen Hintertret- und/oder Untergreifschutz ergänzt oder ersetzt ist.

10. Maschine nach einem der Ansprüche 1 bis 9, **dadurch gekennzeichnet, dass** es als auswechselbares oder nachrüstbares, maschinenunabhängiges Standardbauelement ausgebildet ist.

11. Verfahren zum Betrieb einer Maschine nach einem der Ansprüche 1 bis 10,
**dadurch gekennzeichnet, dass**
bei eingeschaltetem Schutzsystem der Unterbruch wenigstens eines nicht ausgeblendeten Lichtstrahls (36) des Sicherheits-Lichtvorhangs (34) und/oder Streulicht in einer nicht ausgeblendeten Reflexionsposition des Taststrahls (59) des Reflexions-Lichttasters (46) ein elektrisches Signal erzeugt wird, welches seinerseits einen Aktuator eines Maschinenbetätigungsorgans und/oder einer Alarmeinrichtung auslöst.

12. Verfahren nach Anspruch 11, **dadurch gekennzeichnet, dass** durch eine Schutzfeldauswahl automatisch unterschiedliche Betriebsarten der Maschine angesteuert werden.

13. Verfahren nach Anspruch 12, **dadurch gekennzeichnet, dass** durch Detektion automatisch eine geeignete Schutzfeldauswahl erfolgt.

14. Verfahren nach einem der Ansprüche 11 bis 13, **dadurch gekennzeichnet, dass** mit einem Soll-Ist-Vergleich einer CNC-Steuerung Werkstücke (30) erkannt werden.

15. Verfahren nach einem der Ansprüche 11 bis 14, **dadurch gekennzeichnet, dass** Laserstrahlen, insbesondere im sichtbaren und IR-Bereich, eingesetzt werden.

## Claims

1. Machine which is operated with at least some mechanically dangerous operating processes, in particular a bending press (10) with an opto-electronic protection system, which system protects a free entrance and/or access opening (40) in a protective housing or protective cage (14) of the machine at all times during operation, where on both sides of the entrance and/or access opening (40) is arranged an approximately vertical column (38) each with a transmitter or a receiver device respectively for a safety light barrier (34) in the form of a broad surface multi-beam protective field,
**characterised in that**
above the floor at the front edge of the machine, in the vicinity of the entrance and/or access opening (40), is arranged a reflection light scanner (46) which scans a horizontal or inclined surface, where the incline (() and/or geometry can be established, and generates an internal permanent and/or at least one external dynamic protective field (50, 52).

2. Machine according to Claim 1, **characterised in that** the safety light barrier (34) and the reflection light scanner (46), which preferably works with light time or distance measurement, have a resolution of at least around 15 mm in the danger zone, in particular at least around 10 mm, whereby single or multiple beams (36) of the safety light barrier (34) or reflection positions of the protective field (48) of the reflection light scanner (46) can be masked.

3. Machine according to Claim 1 or 2, **characterised in that** consoles (32) to hold workpieces (30), in particular sheet in the case of folding presses (10), have aligned penetration openings (35) for the beams (36) of the safety light barrier (34), or the consoles (32) are at least partially made of a translucent material.

4. Machine according to any one of Claims 1 to 3, **characterised in that** the columns (38) in the vicinity of the protective field (48) of the reflection light scanner (46) have a greatly reduced cross-section in the radial direction of the scanning beam (59).

5. Machine according to Claim 4, **characterised in that** the reduction in the cross-section of the columns (38) is in the form of perforations in the direction of the scanning beam (59), or the columns (38) are completely split through the cross-section and the pieces are held apart by three or four rods (56), whereby the rods (56) are preferably aligned in the direction of the scanning beam (59).

6. Machine according to any one of Claims 1 to 5, **characterised in that** the columns (38) are connected to their foot plate by a lockable spherical adjuster (60), whereby the adjustment angle (β) in relation to the vertical on all sides is preferably a maximum of 10°.

7. Machine according to any one of Claims 1 to 6, **characterised in that** the preferably semicircular protective field (48) of the reflection light scanner (46) is in the form of a diagonal plane at an angle (α) of 10 - 45°, in particular 10 - 30°, in relation to the horizontal.

8. Machine according to any one of Claims 1 to 7, **characterised in that** the linear dimensions of the inner permanent (50) and the outer dynamic (52) protective field (48) of the reflection light scanner (46) are adjustable, preferably program-controlled.

9. Machine according to any one of Claims 1 to 8, **characterised in that** the inner permanent protective field (50) of the reflection light scanner (46) is supplemented or replaced by integrated mechanical guards.

10. Machine according to one of Claims 1 to 9, **characterised in that** it is constructed as an exchangeable or retro-fittable, machine independent standard component.

11. Method for the operation of a machine according to any one of the Claims 1 to 10,
**characterised in that**
with the safety system switched on the interruption of at least one non-masked light beam (36) from the safety light barrier (34) and/or diffused light in a non-masked reflection position of the scanning beam (59) from the reflection light scanner (46) generates an electric signal, which in turn triggers an actuator of a machine operated unit and/or an alarm device.

12. Method according to Claim 11, **characterised in that** different operating modes of the machine are automatically triggered by protective field selection.

13. Method according to Claim 12, **characterised in that** detection is used automatically to select a suitable protective field.

14. Method according to any one of Claims 11 to 13, **characterised in that** a CNC controller recognises workpieces (30) using variance comparison.

15. Method according to any one of Claims 11 to 14, **characterised in that** laser beams, in particular in the visible and IR range, are used.

## Revendications

1. Machine dont la mise en oeuvre comprend des opérations au moins partiellement dangereuses mécaniquement, en particulier presse plieuse (10), qui inclut un système de protection opto-électrique, système qui protège en permanence pendant le fonctionnement une ouverture libre (40) d'accès et/ou de saisie dans un carter de protection ou une cage de protection (14) de la machine, dans laquelle deux colonnes approximativement verticales (38) comportant respectivement un dispositif d'envoi et un dispositif de réception d'un rideau lumineux de sécurité (34) en forme de champ de protection à multiples faisceaux recouvrant la surface sont disposées chacune sur l'un des deux côtés de l'ouverture (40) d'accès et/ou de saisie,
**caractérisée en ce que**
un détecteur (46) à spot mobile par réflexion, qui balaie une surface horizontale ou oblique qui peut être fixée en ce qui concerne l'inclinaison (α) et/ou la géométrie et qui engendre un champ de protection permanent interne (50) et/ou au moins un champ de protection dynamique externe (52), est disposé au-dessus du sol à l'arête avant de la machine, dans la zone de l'ouverture d'accès et/ou de saisie (40).

2. Machine selon la revendication 1, **caractérisée en ce que** la résolution du rideau lumineux de sécurité (42) et du détecteur (46) à spot mobile par réflexion, qui travaille de préférence par mesure de durée de lumière ou mesure de distance, est d'au moins environ 15 mm, en particulier au moins environ 10 mm dans la zone dangereuse, et il est possible de masquer des faisceaux individuels ou plusieurs faisceaux (36) du rideau lumineux de sécurité (42), ou des positions individuelles ou plusieurs positions de réflexion du champ de protection (48) du détecteur (46) à spot mobile par réflexion.

3. Machine selon la revendication 1 ou 2, **caractérisée en ce que** des consoles (32) d'appui de pièces à traiter (30), en particulier de tôles dans le cas des dresses plieuses (10), comportent des ouvertures de passage (35) adaptées les unes aux autres pour laisser passer les faisceaux (36) du rideau lumineux de sécurité (34), ou **en ce que** les consoles (32) consistent au moins en partie en une matière translucide.

4. Machine selon l'une quelconque des revendications précédentes, **caractérisée en ce que** les sections transversales des colonnes (38) sont fortement réduites dans la zone du champ de protection (48) du détecteur (46) à spot mobile par réflexion, en ce qui concerne la direction radiale du faisceau à détecter (59).

5. Machine selon la revendication 4, **caractérisée en ce que** la réduction de la section transversale de la colonne (38) consiste en perforations orientées dans la direction du faisceau à détecter (59), ou **en ce que** la colonne (38) est complètement divisée dans sa section transversale et que les éléments partiels sont reliés au moyen de trois ou quatre barreaux (56) espacés l'un de l'autre, les barreaux (56) étant de préférence disposés l'un derrière l'autre dans la direction du faisceau à détecter (59).

6. Machine selon l'une quelconque des revendications précédentes, **caractérisée en ce que** la colonne (38) est reliée à sa semelle (58) au moyen d'un ajustage sphérique (60) qui peut être bloqué, l'angle d'ajustement (β) par rapport à la verticale étant de préférence au plus égal à environ 10° de tous côtés.

7. Machine selon l'une quelconque des revendications précédentes, **caractérisée en ce que** le champ de protection (48), à structure de préférence semi-circulaire, du détecteur (46) à spot mobile par réflexion consiste en un plan oblique formant avec l'horizontale un angle (α) de 10 à 45°, en particulier de 10 à 30°.

8. Machine selon l'une quelconque des revendications précédentes, **caractérisée en ce que** les dimensions linéaires du champ de protection (48) permanent interne (50) ou dynamique externe (52) du détecteur (46) à spot mobile par réflexion peuvent être réglées, de préférence commandées par programme.

9. Machine selon l'une quelconque des revendications précédentes, **caractérisée en ce que** le champ de protection permanent interne (50) du détecteur (46) à spot mobile par réflexion est complété ou remplacé par une protection mécanique intégrée, par marche en arrière ou par saisie par le dessous.

10. Machine selon l'une quelconque des revendications précédentes, **caractérisée en ce qu'**elle consiste en un module normalisé indépendant de la machine qui est interchangeable ou peut être monté a posteriori.

11. Procédé de mise en oeuvre d'une machine selon l'une quelconque des revendications précédentes,
**caractérisé en ce que**
interrompre au moins un faisceau lumineux non masqué du rideau lumineux de sécurité (34) et/ou une lumière dispersée dans une position de réflexion non masquée du faisceau (59) à détecter du détecteur (46) à spot mobile par réflexion engendre, lorsque le système de protection a été mis sous tension, un signal électrique qui déclenche lui-même un actionneur d'un organe de manoeuvre de la machine et/ou un dispositif d'alarme.

12. Procédé selon la revendication 11, **caractérisé en ce que** des modes de travail différents de la machine sont commandés automatiquement par une sélection de champ de protection.

13. Procédé selon la revendication 12, **caractérisé en ce qu'**une sélection appropriée de champ de protection est effectuée automatiquement par détection.

14. Procédé selon l'une quelconque des revendications 11 à 13, **caractérisé en ce que** des pièces à traiter (30) sont reconnues au moyen d'une comparaison consigne-réel dans une commande numérique par calculateur, ou CNC.

15. Procédé selon l'une quelconque des revendications 11 à 14, **caractérisé par** l'utilisation de faisceaux lasers, en particulier dans les plages visible et infrarouge.
